# EUROPÄISCHE PATENTSCHRIFT

(11) **EP 4 106 940 B1**
(45) Veröffentlichungstag und Bekanntmachung des Hinweises auf die Patenterteilung: **26.06.2024**
(21) Anmeldenummer: 21713568.0
(22) Anmeldetag: 17.02.2021
(51) Int. Cl.: B23B 31/26, B23Q 1/70, F16C 32/06

(54) **AEROSTATISCHES LAGER FÜR EINEN ROTOR, INSBESONDERE IN EINER AUSWUCHTMASCHINE**
AEROSTATIC BEARING FOR A ROTOR, IN PARTICULAR IN A BALANCING MACHINE
PALIER AÉROSTATIQUE CONÇU POUR UN ROTOR, EN PARTICULIER DANS UNE MACHINE À ÉQUILIBRER

(30) Priorität: 19.02.2020 DE 102020104409
(43) Veröffentlichungstag der Anmeldung: 28.12.2022
(73) Patentinhaber: Schenck RoTec GmbH, 64293 Darmstadt (DE)
(72) Erfinder: THELEN, Dieter, 64397 Modautal (DE); PEITER, Dieter, 64380 Roßdorf (DE)
(74) Vertreter: Haarpatent Patentanwälte Krämer Meyer
(86) Internationale Anmeldenummer: PCT/DE2021/100156
(87) Internationale Veröffentlichungsnummer: WO 2021/164826

(56) Entgegenhaltungen:
- DE-A1- 19 621 773
- DE-A1-102011 052 308
- DE-B3-102013 108 956
- DE-U1- 9 414 006

## Beschreibung

Die Erfindung betrifft ein aerostatisches Lager mit einem drehfest in einem Gehäuse angeordneten Lagerelement und einem um seine Drehachse rotierenden Rotor.

In Maschinen wird die Rotation von Teilen oftmals dadurch ermöglicht, dass die Teile auf Lagerspindeln montiert sind, wobei den rotierenden Maschinenteilen ein fluides Medium für Arbeitsvorgänge zugeführt wird. Für diese Zuführung können Drehübertrager verwendet werden, die mit berührenden Dichtungen und Lagern arbeiten. Diese sich berührenden Teile sind jedoch in der Auswuchttechnik nachteilig, da die Reibungskräfte an den Dichtungen und Vorgänge in den Lagern störende Schwingungen verursachen können. Hydrostatische oder aerostatische Lager weisen diese Nachteile nicht auf.

Es sind aerostatische Lager bekannt, bei denen die zwei sich gegeneinander bewegenden Partner durch einen dünnen Luftfilm voneinander getrennt sind. Der trennende Luftfilm wird durch Einleiten von Druckluft in den Lagerspalt erzeugt. Aerostatische Lager eignen sich sehr gut zur Lagerung eines Rotors in einer Auswuchtmaschine, da sie einen sehr gleichmäßigen, störungsarmen Lauf des Rotors bewirken und dadurch eine präzise Unwuchtmessung ermöglichen
Aus US 3 476 451 A ist eine aerostatische Lagerung für eine Welle bekannt, bei der auf der Welle zwei konische Lagerkörper einander entgegengesetzt angeordnet sind, die in passenden Lagerelementen aufgenommen sind. Die Lagerelemente sind in Gehäusebohrungen axial und radial beweglich aufgenommen und mittels radiale Schwingungsbewegungen dämpfenden Dichtringen abgedichtet.

DE 10 2013 108 956 B3 offenbart ein aerostatisches Lager für einen drehbaren Rotor, der eine Drehachse und eine sich zur Drehachse radial erstreckende Lagerfläche aufweist, wobei ein Lagerelement nicht drehbar in einer Bohrung eines Gehäuses angeordnet ist. Das Lagerelement weist eine mit der Lagerfläche zusammenwirkende Gegenlagerfläche und wenigstens einen in der Gegenlagerfläche mündenden Zuführkanal für Druckluft auf und ist in Richtung der Drehachse gegen seine Lage im Gehäuse bestimmende, einander entgegen gerichtete Kräfte bewegbar gelagert und mit einem Dämpfungskörper in Wirkeingriff, der zur Schwingungsdämpfung der axialen Bewegungen des Lagerelements ausgebildet ist.

DE 25 22 260 A1 beschreibt eine Vorrichtung für Auswuchtmaschinen zum Spannen und Zentrieren achsenloser Rotationskörper, die zwischen der Wuchtaufnahme und der Rotationskörperfläche ein Vakuum aufweisen. Der Aufnahmeteller weist mittig einen Kegel und innere und äußere elastische Dichtringe auf. Der Rotor wird axial federnd durch ein Vakuum gegen den Aufnahmeteller gespannt wird, wobei die Vakuumzuführung zwischen den beiden Dichtringen durch die Auswuchtmaschinenspindel erfolgt.

DE 38 38 303 A1 offenbart eine Drehdurchführung für zwei unterschiedliche Fluide.

Aus US 5 553 948 A ist eine Druckluftvorrichtung bekannt, bei der eine Spindel in einer Spann- und Lagerhülse geführt ist. Am Kopf der Spindel liegt ein Tisch vor und dem Tisch gegenüber eine Druckplatte. Auf dem Tisch kann ein Werkstück zur Inspektion montiert werden, das über einen einfachen Ansaugmechanismus am Tisch angesaugt wird. Ober- und unterhalb der Druckplatte sind plattenförmige Lagerelemente angeordnet, so dass ein Axiallagerspalt geformt wird. In den Spalt kann Luft über Düsen eingebracht werden. Gleichzeitig formt die sich axial erstreckende Außenfläche der Spindel zusammen mit der Lagerhülse einen Radiallagerspalt, in den ebenfalls Druckluft einleitbar ist. Die Druckluft kann über Ableitungen entweichen, die zwischen Spann- und Lagerhülse angeordnet sind. Die Anordnung der Leitungen verhindert, dass die Druckluft zu Staubverwirbelungen sorgt, die das zu untersuchende Werkstück verunreinigen. Außerdem kann entweichende Druckluft über den Ansaugmechanismus entfernt werden.

DE 94 14 006 U1 offenbart eine Hohlspindel mit angekoppelter Spannzange, bei der die Hohlspindel in einer in einem Gehäuse eingesetzten Laufbuchse aerostatisch gelagert ist. Die Spannvorrichtung wird durch einen Kolben betätigt, der über eine Zuführleitung mit Druckluft versorgt wird, wobei die entgegengesetzte Bewegung des Kolbens durch eine Druckfeder bewirkt wird.

Nachteilig bei dem bekannten Stand der Technik ist, dass für die bekannten Lager keine Lösungen existieren, die die Zu- und Abführung von Betätigungsluft ermöglichen. Die Lager befassen sich ausschließlich mit der Zu- und Abführung der für die Luftlagerung benötigten Druckluft.

Der Erfindung liegt die Aufgabe zugrunde, ein aerostatisches Lager bereitzustellen, das nicht die Nachteile der bekannten Lager aufweist und das die Betätigung einer pneumatischen Spannvorrichtung erleichtert.

Gelöst wird die Aufgabe durch die Lehre des Anspruchs 1. Vorteilhafte Ausgestaltungen sind in den abhängigen Ansprüchen aufgeführt.

Die Aufgabe wird erfindungsgemäß dadurch gelöst, dass ein aerostatisches Lager für einen drehbaren Rotor bereitgestellt wird, der eine Drehachse und eine sich radial zur Drehachse erstreckende Axiallagerfläche und eine sich axial zur Drehachse erstreckende Radiallagerfläche aufweist, mit einem nicht drehbar in einer Bohrung eines Gehäuses angeordneten drehfesten Lagerelement, das eine mit der Axiallagerfläche zusammenwirkende axiale Gegenlagerfläche und eine mit der Radiallagerfläche zusammenwirkende radiale Gegenlagerfläche aufweist, in die jeweils wenigstens ein Zuführkanal zur Zuführung von Druckluft mündet, wobei der Rotor einen zentralen Hohlraum aufweist, der zur Aufnahme einer pneumatisch betätigbaren Werkzeugspannvorrichtung ausgebildet ist und der Hohlraum über kommunizierende, den Rotor und das drehfeste Lagerelement durchdringende Zuführleitungen mit im Gehäuse ausgebildeten Versorgungs- und Abführleitungen für die Zu- und Abführung von Betätigungsluft verbunden ist. Das erfindungsgemäße Lager stellt eine Kombination dar, mit der nicht nur die Lagerung eines Rotors erreicht wird, sondern auch eine Betätigung einer pneumatischen Spannvorrichtung möglich ist. Ein mit dem aerostatischen Lager verbundenes Druckluftsystem kann somit für die Bereitstellung der für die Lagerung notwendigen Druckluft und der für die pneumatische Betätigung notwendige Betätigungsluft genutzt werden. Es werden keine separaten Lösungen für die Zu- und Abführung von Betätigungsluft benötigt. Mit dem erfindungsgemäßen Lager, das insbesondere in Auswuchtmaschinen Anwendung findet, kann die Zu- und Abführung von für die Lagerung notwendiger Druckluft sowie die Zu- und Abführung von Betätigungsluft sichergestellt werden.

Die Verwendung des aerostatischen Lagers ermöglicht die Bereitstellung eines engen Lagerspaltes, der nicht nur für die Lagerung des Rotors, sondern auch für die Funktion der pneumatisch betätigbaren Werkzeugspannvorrichtung von Vorteil ist. Erfahrungen zeigen, dass mit anderen Lagern eine nicht so präzise Lagerung wie mit einem aerostatischen Lager erreicht werden kann, was wiederum einen größeren Lagerspalt nach sich zieht und aufgrund der Undichtigkeit mit einer ungenauen Funktion einer pneumatisch betätigbaren Werkzeugspannvorrichtung einhergeht. Bezüglich der Vorteile eines aerostatischen Lagers wird auf die DE 10 2013 108 956 B3 Bezug genommen.

Das Lagerelement kann als ein insbesondere ringförmiges Element ausgestaltet sein. Es kann jedoch auch vorgesehen sein, dass das Lagerelement zweigeteilt ausgestaltet ist und eine obere und eine untere Lagerhülse umfasst. Hierdurch ist das Lagerelement in unterschiedlich ausgestaltete Auswuchtmaschinen integrierbar, da es an die Länge der Aufnahme einfach anpassbar ist. Diesbezüglich ist es vorteilhaft, wenn die untere und die obere Lagerhülse je eine radiale Gegenlagerfläche aufweisen, in die wenigstens ein Zuführkanal mündet.

Besonders vorteilhaft für die Lagerung ist es, wenn das Lagerelement über mindestens zwei, vorzugsweise drei in der radialen Gegenlagerfläche mündender Zuführkanäle verfügt. Ist das Lagerelement gemäß einer vorteilhaften Ausgestaltung in eine untere und eine obere Lagerhülse geteilt, ist es vorteilhaft, dass eine der beiden Lagerhülsen einen Zuführkanal und entweder die obere oder die untere Lagerhülse zwei Zuführkanäle aufweisen. Somit verfügt die obere Lagerhülse und die untere Lagerhülse über mindestens ein Radiallager, die jeweils eine Radiallagerfläche formen. In einer Ausgestaltung verfügt lediglich die obere Lagerhülse über ein Axiallager, das heißt über eine axiale Gegenlagerfläche, in die ein Zuführkanal mündet und die mit der axialen Lagerfläche des Rotors zusammenwirkt. Es kann aber auch vorgesehen sein, dass die untere Lagerhülse zusätzlich zu oder anstelle von der oberen Lagerhülse über ein Axiallager verfügt, das entsprechend eine axiale Gegenlagerfläche formt, die mit einer Axiallagerfläche des Rotors zusammenwirkt.

Zwischen dem Rotor und dem Lagerelement, das heißt, insbesondere zwischen den Lagerflächen liegt vorteilhafterweise ein Lagerspalt vor, in den über die Zuführkanäle Druckluft einbringbar ist. In den Lagerspalt wird Druckluft eingebracht, so dass der Rotor auf einem Luftpolster getragen wird. Für die Luftableitung können entsprechend in dem Lagerelement bzw. dem Gehäuse vorliegende Abführkanäle und Abführleitungen, wie auch etwaige Ringspalte zwischen Rotor und Lagerelement sorgen, über die Abluft entweichen kann.

Es ist vorgesehen, dass der Rotor buchsenförmig ausgestaltet ist und an seinem oberen Ende einen ringförmigen Flansch aufweist, der sich von der Buchse radial nach außen erstreckt und die axiale Lagerfläche bildet, die mit der axialen Gegenlagerfläche des Lagerelements zusammenwirkt. Die axiale Lagerfläche steht der Gegenlagerfläche im Wesentlichen gegenüber, so dass sich ein Luftpolster zwischen beiden Flächen bilden kann.

Um eine Drehung des Rotors, der als Spindelkörper ausgestaltet sein kann, zu erreichen, kann der Rotor mit seinem unteren Ende drehfest mit einem Drehantrieb verbunden sein. Der Rotor kann beispielsweise mittels Befestigungsmittel, die in entsprechende Bohrungen im Rotor eingreifen, mit einem Anschluss für den Drehantrieb verbunden werden.

Damit die Betätigungsluft geregelt in den Rotor strömt, kann vorgesehen sein, dass den Zuführleitungen für die Zuführung von Betätigungsluft in die Hohlräume zwecks Steuerung Ventile vorgeschaltet sind. Hierdurch kann die pneumatische Spannvorrichtung über die Regelung der Zufuhr der Betätigungsluft einfach gesteuert werden.

Das aerostatische Lager findet vorzugsweise in Auswuchtmaschinen Verwendung. Das heißt, die beschriebenen Ausgestaltungen und Vorteile gelten bevorzugt auch für eine Auswuchtmaschine mit einem aerostatischen Lager. Die Erfindung betrifft demnach auch eine Auswuchtmaschine mit einem zuvor beschriebenen aerostatischen Lager für einen drehbaren Rotor, der eine Drehachse und eine sich radial zur Drehachse erstreckende Axiallagerfläche und eine sich axial zur Drehachse erstreckende Radiallagerfläche aufweist, mit einem nicht drehbar in einer Bohrung eines Gehäuses angeordneten drehfesten Lagerelement, das eine mit der Axiallagerfläche zusammenwirkende axiale Gegenlagerfläche und eine mit der Radiallagerfläche zusammenwirkende radiale Gegenlagerfläche aufweist, in die jeweils mindestens ein Zuführkanal zur Zuführung von Druckluft mündet, wobei der Rotor einen zentralen Hohlraum aufweist, der zur Aufnahme einer pneumatisch betätigbaren Werkzeugspannvorrichtung ausgebildet ist und der Hohlraum über kommunizierende den Rotor und das drehfeste Lagerelement durchdringende Zuführleitungen mit im Gehäuse ausgebildeten Versorgungs- und Abführleitungen für die Zu- und Abführung von Betätigungsluft verbunden ist.

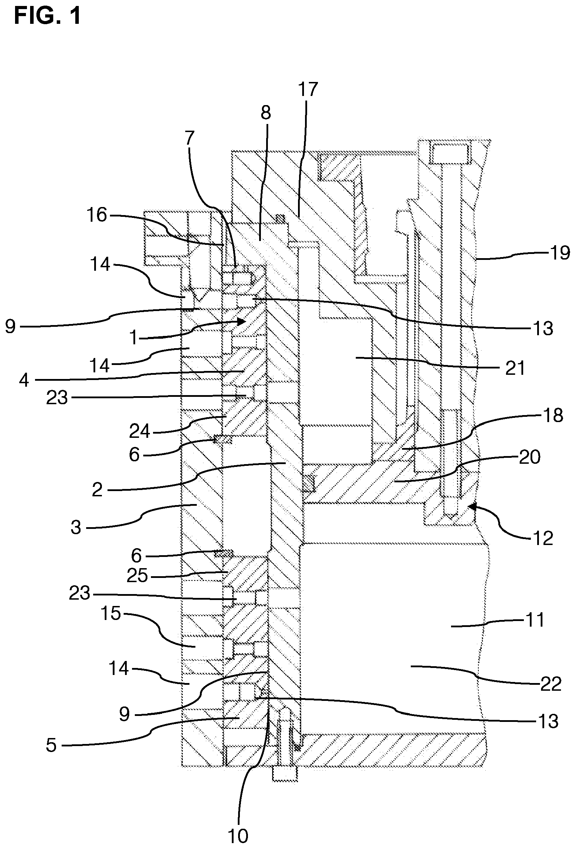

Die Erfindung wird nachfolgend anhand eines Ausführungsbeispiels der Erfindung näher erläutert, das in der Figur 1 dargestellt ist.

In der Zeichnung ist ein Ausschnitt einer Lagerspindel einer Auswuchtwuchtmaschine mit einem aerostatischen Lager zum Auswuchten von schnell rotierenden Werkzeugen, wie z. B. Fräser, Bohrer usw. für die Hochgeschwindigkeitsbearbeitung dargestellt. Das Lager umfasst ein äußeres Spindelgehäuse, in dem, nicht drehbar in einer Bohrung des Gehäuses ein Lagerelement 1 angeordnet ist. Benachbart zu diesem ist ein als Spindelkörper ausgestalteter, sich drehender Rotor 2 vorgesehen. Der Spindelkörper formt eine im Wesentlichen zylindrische Aufnahme, um ein auszuwuchtendes Werkzeug aufzunehmen.

Das Lagerelement 1 legt sich an ein Gehäuse 3 mit einer zylindrischen Gehäusebohrung an und umfasst in Figur 1 eine erste obere Lagerhülse 4 und eine zweite untere Lagerhülse 5. Das Lagerelement 1 kann jedoch auch einteilig ausgestaltet sein. Die Lagerhülsen 4, 5 können jede als ein ringförmiger Körper oder als zwei separate Ringe ausgebildet sein, die sich axial an ein im Gehäuse 3 vorgesehenes Abstützmittel 6 stützen, das durch im Gehäuse 3 vorliegende Absätze oder sonstige Mittel gebildet sein kann. Die obere Lagerhülse 4 bildet mit ihrem oberen axialen Ende ein Axiallager 7 für einen Flansch 8 des als Spindelkörper ausgestalteten Rotors 2 und formt somit eine sich radial zur Drehachse erstreckende axiale Gegenlagerfläche, die mit der vom Flansch 8 des Rotors 2 gebildeten axialen Lagerfläche zusammenwirkt. Die obere Lagerhülse 4 sowie die untere Lagerhülse 5 bilden jeweils ein Radiallager 9 für den Rotor 2 und formen somit eine sich axial zur Drehachse erstreckende radiale Gegenlagerfläche, die mit einer radialen Lagerfläche des Rotors 2 zusammenwirkt, die durch die Außenfläche des Rotors 2 gebildet wird. Sie sind jeweils kombiniert mit einem ringförmigen Zuführelement 24, 25 zur Zuführung der Betätigungsluft über die Zuführleitung 23. Die Zuführelemente 24, 25 und die jeweiligen Lagerhülsen 4, 5 können einteilig oder mehrteilig ausgestaltet sein. Das heißt, ein Zuführelement 24, 25 kann als Bestandteil einer Lagerhülse 4, 5 ausgestaltet oder alternativ mit dieser reversibel verbindbar sein.

Der als Spindelkörper gestaltete Rotor 2 besteht aus einer im Wesentlichen zylindrischen Buchse mit dem am oberen Ende angeordneten, ringförmigen Flansch 8, der sich von der Buchse radial nach außen erstreckt. Der Rotor 2 wird von den beiden Radiallagern 9 des Lagerelements 1 und dem Axiallager 7 gelagert, wobei zwischen Axiallagerfläche bzw. Radiallagerfläche des Rotors 2 und den radialen bzw. axialen Gegenlagerflächen des Lagerelements 1 ein Lagerspalt 10 vorliegt. Der Rotor 2 kann mittels Befestigungsmittel an seinem dem Flansch 8 entgegengesetztem Ende drehfest mit einem Drehantrieb verbunden sein. Der Rotor 2 weist einen zentralen Hohlraum 11 auf, der zur Aufnahme einer pneumatisch betätigbaren Werkzeugspannvorrichtung 12 ausgebildet ist.

In der Radiallagerfläche münden mehrere, insbesondere drei sich radial durch das Lagerelement 1, insbesondere durch die obere und untere Lagerhülse 4, 5 erstreckende Zuführkanäle 13 in Form von Kapillarbohrungen oder Drosselbohrungen, die an Ringnuten 14 in dem Gehäuse 3 angeschlossen sind und zugeführte Druckluft in die Radiallager 9 leiten. Die Ringnuten 14 können beispielsweise teilweise über nicht dargestellte axiale Luftkanäle im Gehäuse 3 mit Druckluft gespeist werden, die an einem Anschluss an eine Druckluftquelle für die Radiallager 9 anschließbar sind. In dem Lagerelement 1, sprich in der oberen und unteren Lagerhülse 4, 5 sind ferner Abführkanäle vorgesehen, die in im Gehäuse 3 vorliegenden Ringnuten 15 münden, über die eingebrachte Druckluft entweichen kann.

In dem Axiallager 7 der oberen Lagerhülse 4, genauer der axialen Gegenlagerfläche der Lagerhülse 4 mündet ein sich durch das Lagerelement 1 erstreckender Zuführkanal 13 in Gestalt einer Kapillarbohrung oder Drosselbohrung, der von nicht dargestellten Bohrungen im Gehäuse 3 mit Druckluft gespeist werden kann. Die in die Axiallagerfläche geleitete Druckluft kann beispielsweise über einen zwischen Gehäuse 3 und Rotor 2 vorliegenden Ringspalt 16 entweichen. Außerdem kann die Druckluft über sonstige Abführkanäle 15 im Lagerelement 1 entweichen.

Innerhalb des als Spindelkörper ausgestalteten Rotors 2 befindet sich ein System 12 zum Spannen des auszuwuchtenden Werkzeuges, bzw. dessen Halter. Derartige Halter sind dem Fachmann zum Beispiel als Steilkegelsysteme oder Hohlschaftkegelsysteme bekannt. In der Figur 1 ist exemplarisch ein Hohlschaftkegelsystem dargestellt, ohne jedoch hierauf beschränkt zu sein. Das Spannsystem 12 umfasst hierbei eine Aufnahme 17, die sich mit einem umlaufenden Flansch auf dem Flansch 8 des Rotors 2 abstützt. Das Spannsystem 12 umfasst ferner eine Spannhülse 18, einen Spannbolzen 19 und einen Spannkolben 20, die eine pneumatisch betätigbare Werkzeugspannvorrichtung 12 bilden, mit der das Werkzeug gespannt werden kann. Der Spannkolben 20 liegt mit seinem scheibenförmigen Kolbenkopf, insbesondere dessen Peripheriefläche an dem Rotor 2 an und teilt den Hohlraum 11 des Rotors 2 in im Wesentlichen zwei Kammern 21, 22, nämlich eine obere 21 und eine untere Kammer 22. In der Innenmantelfläche des Rotors 2 kann eine Dichtung, wie zum Beispiel ein Dichtring anliegen.

In dem Lagerelement 1 sind in den Zuführelementen 24, 25 ferner Zuführleitungen 23 vorgesehen, die im vom Rotor 2 gebildeten Hohlraum 11 münden. Die genannten Zuführleitungen 23 können über Versorgungsleitungen in Gestalt von Bohrungen im Gehäuse 3 mit Druckluft versorgt werden. Über die obere Lagerhülse 4 kann über die Zuführleitung 23 Druckluft in Form von Betätigungsluft in die obere Kammer 21 eingebracht werden, wohingegen über Zuführleitungen 23 in der unteren Lagerhülse 5 Betätigungsluft in die untere Kammer 22 einbringbar ist. Es ist vorteilhaft, wenn das Lagerelement 1 über mindestens eine Zuführleitung 23, vorzugsweise mehrere Zuführleitungen 23 verfügt. Ist das Lagerelement 1 gemäß einer Ausgestaltung in eine obere und untere Lagerhülse 4, 5 geteilt, liegt vorteilhafterweise wenigstens eine Zuführleitung 23 jeweils in der oberen und unteren Lagerhülse 4, 5 vor.

Um einen betriebsbereiten Zustand des Lagers zu erreichen, wird gleichzeitig den Radiallagern 9 und dem Axiallager 7 über die Anschlüsse Druckluft zugeführt.

Um das Werkzeug zu Spannen wird ferner Betätigungsluft durch die im Gehäuse 3 vorliegenden und z. B. als Bohrung ausgestaltete Versorgungsleitung und Zuführleitung 23 der oberen Lagerhülse 4 in die obere Kammer 21 geleitet, so dass der Spannkolben 20 nach unten bewegt wird.

Um den Spannkolben 20 in die entgegengesetzte Richtung zu bewegen und das Werkzeug zu entspannen, wird die Zufuhr von Betätigungsluft in die obere Kammer 21 zum Beispiel über ein Ventil unterbrochen, wohingegen über ein anderes Ventil Betätigungsluft durch die als Bohrung ausgestaltete Versorgungsleitung und Zuführleitung 23 in die untere Kammer 22 eingebracht wird, so dass sich der Spannkolben 20 nach oben bewegt. Selbstverständlich können mehrere in die obere bzw. untere Kammer 21, 22 mündende Zuführleitungen vorgesehen sein (nicht in Figur 1 gezeigt), die von entsprechenden Versorgungsleitungen im Gehäuse mit Betätigungsluft gespeist werden und die je nach Ventileinstellung als Versorgungsleitung zur Zuführung von Betätigungsluft oder als Abführleitungen zur Druckentlastung, das heißt zur Abführung von Betätigungsluft dienen können. Ferner kann in einer nicht dargestellten Ausgestaltung vorgesehen sein, dass die Betätigungsluft über separate von den Versorgungsleitungen getrennte Zuführleitungen, die mit im Gehäuse vorliegenden und als Bohrungen ausgestalteten Abführleitungen aus der oberen bzw. der unteren Kammer 21, 22 entweicht.

In der Erfindung sind aerostatisches Lager und Dichtspaltsystem in mindestens einem insbesondere ringförmigen Körper kombiniert und eine Betätigung einer pneumatischen Werkzeugspannvorrichtung möglich. Das aerostatische Lager führt den Rotor sehr präzise, so dass der Dichtspalt zur Übertragung der Druckluft sehr eng ausgeführt werden kann. Die Leckageluftmenge ist dadurch als gering anzusehen.

## Patentansprüche

1. Aerostatisches Lager mit einem drehbaren Rotor (2), der eine Drehachse und eine sich radial zur Drehachse erstreckende Axiallagerfläche und eine sich axial zur Drehachse erstreckende Radiallagerfläche aufweist, mit einem nicht drehbar in einer Bohrung eines Gehäuses (3) angeordneten drehfesten Lagerelement (1), das eine mit der Axiallagerfläche zusammenwirkende axiale Gegenlagerfläche und eine mit der Radiallagerfläche zusammenwirkende radiale Gegenlagerfläche aufweist, in die jeweils wenigstens ein Zuführkanal (13) zur Zuführung von Druckluft mündet, wobei der Rotor (2) einen zentralen Hohlraum (11) aufweist, der zur Aufnahme einer pneumatisch betätigbaren Werkzeugspannvorrichtung (12) ausgebildet ist und der Hohlraum (11) über kommunizierende, den Rotor (2) und das drehfeste Lagerelement (1) durchdringende Zuführleitungen (23) mit im Gehäuse (3) ausgebildeten Versorgungs- und Abführleitungen für die Zu- und Abführung von Betätigungsluft verbunden ist.

2. Aerostatisches Lager nach Anspruch 1, **dadurch gekennzeichnet, dass** mindestens zwei in der radialen Gegenlagerfläche mündende Zuführkanäle (13) vorliegen.

3. Aerostatisches Lager nach einem der Ansprüche 1 oder 2, **dadurch gekennzeichnet, dass** das Lagerelement (1) zweigeteilt ausgestaltet ist und eine obere und eine untere Lagerhülse (4, 5) umfasst.

4. Aerostatisches Lager nach Anspruch 3, **dadurch gekennzeichnet, dass** die Lagerhülsen (4, 5) je eine radiale Gegenlagerfläche aufweisen, in die mindestens ein Zuführkanal (13) mündet.

5. Aerostatisches Lager nach einem der vorhergehenden Ansprüche, **dadurch gekennzeichnet, dass** zwischen Rotor (2) und Lagerelement (1) ein Lagerspalt (10) vorliegt, in den über die Zuführkanäle (13) Druckluft einbringbar ist.

6. Aerostatisches Lager nach einem der vorhergehenden Ansprüche, **dadurch gekennzeichnet, dass** der Rotor (2) buchsenförmig ausgestaltet ist und an seinem oberen Ende ein ringförmiger Flansch (8) vorliegt, der sich von der Buchse radial nach außen erstreckt und die axiale Lagerfläche bildet.

7. Aerostatisches Lager nach einem der vorhergehenden Ansprüche, **dadurch gekennzeichnet, dass** der Rotor (2) mit seinem unteren Ende drehfest mit einem Drehantrieb verbindbar ist.

8. Aerostatisches Lager nach einem der vorhergehenden Ansprüche, **dadurch gekennzeichnet, dass** ein Spannkolben (20) mit seinem scheibenförmigen Kolbenkopf an dem Rotor (2) anliegt und den Hohlraum (11) des Rotors (2) in zwei Kammern (21, 22) teilt.

9. Aerostatisches Lager nach Anspruch 8, **dadurch gekennzeichnet, dass** den Zuführleitungen (23) für die Zuführung von Betätigungsluft in die Kammern (11, 21) zwecks Steuerung Ventile vorgeschaltet sind.

10. Verwendung des aerostatischen Lagers nach den Ansprüchen 1 bis 9 in einer Auswuchtmaschine.

## Claims

1. Aerostatic bearing with a rotatable rotor (2) which has an axis of rotation and an axial bearing surface extending radially to the axis of rotation and a radial bearing surface extending axially to the axis of rotation, with a rotationally fixed bearing element (1) which is arranged non-rotatably in a bore of a housing (3) and which has an axial counter-bearing surface cooperating with the axial bearing surface and a radial counter-bearing surface cooperating with the radial bearing surface, into each of which at least one supply channel (13) for supplying compressed air opens, the rotor (2) having a central cavity (11) which is designed to accommodate a pneumatically actuatable tool clamping device (12), and the cavity (11) being connected via communicating supply lines (23), which penetrate the rotor (2) and the rotationally fixed bearing element (1), to supply and discharge lines, which are formed in the housing (3), for the supply and discharge of actuating air.

2. Aerostatic bearing according to claim 1, **characterized in that** at least two supply channels (13) opening into the radial counter-bearing surface are present.

3. Aerostatic bearing according to one of claims 1 or 2, **characterized in that** the bearing element (1) is designed in two parts and comprises an upper and a lower bearing sleeve (4, 5).

4. Aerostatic bearing according to claim 3, **characterized in that** the bearing sleeves (4, 5) each have a radial counter-bearing surface into which at least one supply channel (13) opens.

5. Aerostatic bearing according to one of the preceding claims, **characterized in that** there is a bearing gap (10) between the rotor (2) and the bearing element (1), into which compressed air can be introduced via the supply channels (13).

6. Aerostatic bearing according to one of the preceding claims, **characterized in that** the rotor (2) is bush-shaped and at its upper end there is an annular flange (8) which extends radially outwards from the bush and forms the axial bearing surface.

7. Aerostatic bearing according to one of the preceding claims, **characterized in that** the lower end of the rotor (2) can be connected to a rotary drive in a rotationally fixed manner.

8. Aerostatic bearing according to one of the preceding claims, **characterized in that** a clamping piston (20) bears with its disc-shaped piston head against the rotor (2) and divides the cavity (11) of the rotor (2) into two chambers (21, 22).

9. Aerostatic bearing according to claim 8, **characterized in that** valves are connected upstream of the supply lines (23) for the supply of actuating air into the chambers (11, 21) for the purpose of control.

10. Use of the aerostatic bearing according to claims 1 to 9 in a balancing machine.

## Revendications

1. Palier aérostatique avec un rotor rotatif (2) qui présente un axe de rotation et une surface de palier axial s'étendant radialement par rapport à l'axe de rotation et une surface de palier radial s'étendant axialement par rapport à l'axe de rotation, avec un élément de palier (1) fixe en rotation qui est disposé de manière non rotative dans un trou d'un logement (3) et qui présente une contre-surface de palier axial coopérant avec la surface de palier axial et une contre-surface de palier radial coopérant avec la surface de palier radial, dans chacun desquels débouche au moins un canal d'alimentation (13) pour l'amenée d'air comprimé, le rotor (2) présentant une cavité centrale (11) qui est conçue pour recevoir un dispositif de serrage d'outil (12) à commande pneumatique, et la cavité (11) étant reliée, par des conduites d'alimentation (23) qui communiquent et qui traversent le rotor (2) et l'élément de palier (1) fixe en rotation, à des conduites d'alimentation et d'évacuation formées dans le logement (3) pour l'amenée et l'évacuation de l'air d'actionnement.

2. Palier aérostatique selon la revendication 1, **caractérisé en ce qu'**au moins deux canaux d'alimentation (13) sont prévus, lesquels débouchent dans la contre-surface de palier radial.

3. Palier aérostatique selon l'une des revendications 1 ou 2, **caractérisé en ce que** l'élément de palier (1) est conçu en deux parties et comprend un manchon de palier supérieur et un manchon de palier inférieur (4, 5).

4. Palier aérostatique selon la revendication 3, **caractérisé en ce que** les manchons de palier (4, 5) présentent chacun une contre-surface de palier radial dans laquelle débouche au moins un canal d'alimentation (13).

5. Palier aérostatique selon l'une des revendications précédentes, **caractérisé en ce qu'**une fente de palier (10) est présente entre le rotor (2) et l'élément de palier (1) dans laquelle de l'air comprimé peut être introduit par les canaux d'alimentation (13).

6. Palier aérostatique selon l'une des revendications précédentes, **caractérisé en ce que** le rotor (2) est en forme de douille et **en ce qu'**à son extrémité supérieure se trouve une bride annulaire (8) qui s'étend radialement vers l'extérieur depuis la douille et forme la surface de palier axial.

7. Palier aérostatique selon l'une des revendications précédentes, **caractérisé en ce que** le rotor (2) peut être relié solidaire en rotation par son extrémité inférieure à un entraînement rotatif.

8. Palier aérostatique selon l'une des revendications précédentes, **caractérisé en ce qu'**un piston de serrage (20) s'appuie par sa tête de piston en forme de disque sur le rotor (2) et divise la cavité du rotor (2) en deux chambres (21, 22).

9. Palier aérostatique selon la revendication 8, **caractérisé en ce qu'**à des fins de commande, des soupapes sont montées en amont des conduites d'alimentation (23) pour l'amenée de l'air d'actionnement dans les chambres (11, 21).

10. Utilisation du palier aérostatique selon les revendications 1 à 9 dans une machine d'équilibrage.
